# EUROPEAN PATENT APPLICATION

(11) **EP 4 726 645 A1**
(43) Date of publication of application: **15.04.2026**
(21) Application number: 24216915.9
(22) Date of filing: 02.12.2024
(51) Int. Cl.: G06T 5/70, H04N 19/70, H04N 19/85

(54) **FILM GRAIN DECOMPOSITION AND PROCESSING IN TRANSMISSION SYSTEM**

(30) Priority: 14.10.2024 CN 202411433341; 25.10.2024 US 202418927454
(71) Applicant: Beijing YoJaJa Software Technology Development Co., Ltd., Beijing 100015 (CN)
(72) Inventor: MENG, Xuewei, Beijing, 100015 (CN); ZHANG, Wenhao, Beijing, 100015 (CN)
(74) Representative: Müller-Boré & Partner Patentanwälte PartG mbB

(57) **Abstract**

In some embodiments, source content is received. A method decomposes the source content into a plurality of components. The components in the plurality of components include first film grain content and second film grain content. The first film grain content is processed where the first film grain content is processed via an encoder system or a film grain synthesis system. The method delivers information for the first film grain content that was processed via the encoder system or the film grain synthesis system to a client device. The second film grain content is not delivered to the client device.

## Description

### CROSS REFERENCE TO RELATED APPLICATIONS

Pursuant to 35 U.S.C. §119(a), this application is entitled to and claims the benefit of the filing date of 2024114333418 filed October 14, 2024 in China, entitled "FILM GRAIN DECOMPOSITION AND PROCESSING IN TRANSMISSION SYSTEM", the content of which is incorporated herein by reference in its entirety for all purposes.

### BACKGROUND

Film grain may be one of the distinguishing characteristics of videos that are produced, such as in videos captured by traditional film cameras (e.g., shows or movies produced by the movie industry). Film grain may be a perceptually pleasing noise that could be illustrated with artistic intention. However, including film grain in videos that are streamed over a network to client devices may pose technical challenges, such as the bitrate required to encode videos that include film grain may be high. This results in a high bandwidth requirement that may not be compatible with streaming environments. To save bandwidth, film grain may be removed from the videos before streaming the videos to client devices. However, viewers may not be satisfied with the visual quality of the videos without the film grain included.

One technique may be to synthesize film grain at the client device to add the film grain back on top of decoded video frames, which mimics the film grain in the source video. This process may introduce film grain back into the video. However, the film grain synthesis may be a challenging task to recover an accurate replica of the original film grain in the source video. Further, the film grain synthesis may also add undesirable effects to the video frames, such as new visual artifacts.

### BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.
FIG. 1 depicts a simplified system for generating film grain for a video according to some embodiments.
FIG. 2 depicts an example of a configuration #1 according to some embodiments.
FIG. 3 depicts an example of a configuration #2 according to some embodiments.
FIG. 4 depicts a configuration #3 according to some embodiments.
FIG. 5 depicts a simplified flowchart of a method for performing a film grain decomposition process according to some embodiments.
FIG. 6 depicts a simplified flowchart of an encoding-based decomposition process according to some embodiments.
FIG. 7 depicts an example of a prediction network that can be used to perform the decomposition according to some embodiments.
FIG. 8 depicts a second example for determining encoder-friendly film grain and synthesis friendly film grain according to some embodiments.
FIG. 9 shows an example of the selection of components using the frequency domain according to some embodiments.
FIG. 10 illustrates one example of a computing device according to some embodiments.

### DETAILED DESCRIPTION

Described herein are techniques for a content delivery system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

A system uses a process of film grain decomposition to improve the encoding, transmission, and display of content, such as video. The system may adaptably decompose film grain from the source content into different components, such as encoding friendly film grain, synthesis friendly film grain, and encoding unfriendly/synthesis unfriendly film grain. The encoding friendly film grain may be encoded via a regular video encoding pipeline of the delivery system. That is, the content without the film grain (e.g., clean content) and the encoding friendly film grain may be encoded together by an encoder, and then decoded together. Because of the encoding friendly nature, the film grain may be preserved by the encoding pipeline.

The synthesis friendly film grain may be modeled by a film grain synthesis system on the server side, and then synthesized by a film grain synthesis system at the client device. The encoding unfriendly/synthesis unfriendly film grain may be encoding unfriendly film grain, synthesis unfriendly film grain, or encoding unfriendly and synthesis unfriendly film grain. The encoding unfriendly/synthesis unfriendly film grain may be excluded from being transmitted, such as it will not be encoded via the encoding pipeline or synthesized by the film grain synthesis system pipeline. At the client device, if received, the encoding friendly film grain, the synthesis friendly film grain, or the encoding friendly film grain and the synthesis friendly film grain may be used to produce the final decoded content that is displayed at the client device. For example, the clean content and encoding friendly film grain is combined with the synthesis friendly film grain to produce the final content. In other embodiments, just the clean content and encoding friendly film grain is used to produce the final content. In another embodiment, just the clean content and the synthesis friendly film grain is used to produce the final content.

Using the above decomposition, the encoding, delivery, and display of content is improved. For example, by excluding the encoding unfriendly or film grain synthesis unfriendly film grain, the encoded content may use less bitrate. For example, the encoding unfriendly film grain may require a very high bitrate to encode to preserve the film grain using the encoding pipeline. If the bitrate is not high enough, then the encoder may naturally remove the film grain during the encoding process. Thus, if the system wants to keep the film grain in the decoded video, a higher bitrate is required. For example, if the film grain content and the clean content is encoded at 10 megabits per second (Mbps), the encoder may encode the video, but the decoded video may not include the film grain. However, at 20 Mbps, the decoded video may include the film grain. However, the higher bitrate may require more bandwidth to transmit. The use of the higher bitrate may place a high burden on the encoder and system resources. Also, the delivery process may be improved because available bandwidth may be limited in some cases. This may result in rebuffering during playback, where not enough content is available to play at the client device.

Also, excluding the synthesis unfriendly film grain may improve the display of the final content at the client device. For example, synthesis unfriendly film grain may result in artifacts in the synthesized film grain or may be different from the original artistic intention. The artifacts may not exist in the final decoded video when the synthesis unfriendly film grain is not used. Also, the film grain that differs from the original film grain may not exist when synthesis unfriendly film grain is not used.

### System

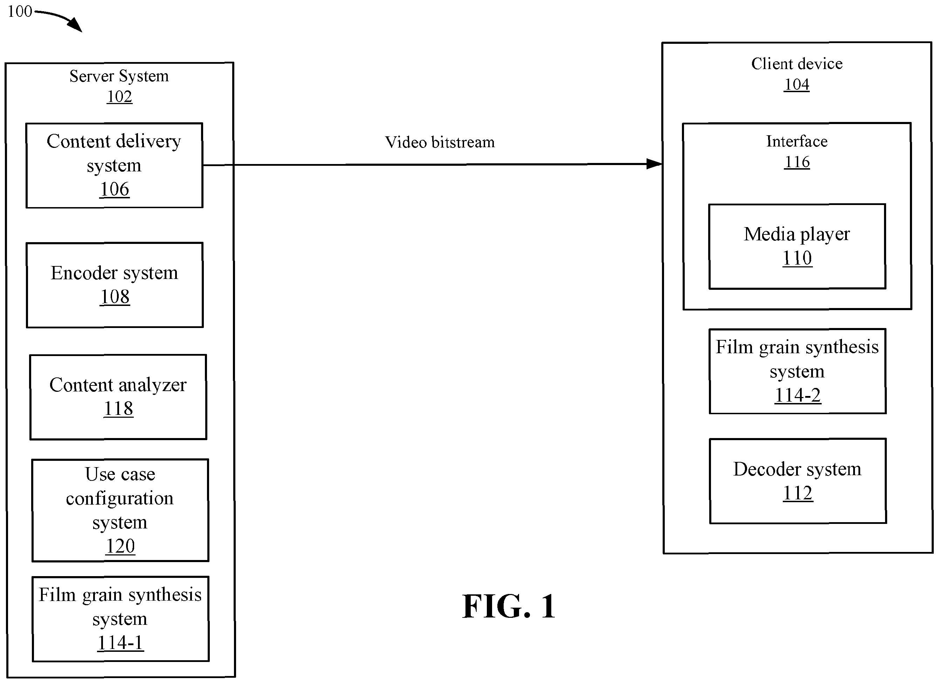

FIG. 1 depicts a simplified system 100 for generating film grain for a video according to some embodiments. System 100 includes a server system 102 that provides a service to deliver content to a client device 104. Although the discussion may use server system 102 and client device 104 to generate film grain, the process described may be used in different ways. For example, film grain synthesis may be performed solely on server system 102, solely on client device 104, or distributed in different ways on different devices.

A content provider may operate content delivery system 106 to provide a content delivery service that allows entities to request and receive media content. The content provider may use content delivery system 106 to coordinate the distribution of media content to clients. The media content may be different types of content, such as video, audio, etc. The videos may be programs, such as movies, shows, advertisements, etc. Server system 102 may receive a source video that may include different types of content, such as video, audio, or other types of content information. Encoder system 108 may encode the source video to create an encoded version of the source video, which may be delivered as a video bitstream to client device 104. Although the delivery of videos is shown from content delivery system 106 to client device 104, content delivery system 106 may use a content delivery network (not shown) to deliver videos to client device 104. Although a source video is described, any content in which film grain may be present may be used, such as images. Different types of encoders may be used, such as encoders that use different coding specifications.

Client device 104 may include different computing devices, such as smartphones, living room devices, televisions, set top boxes, tablet devices, etc. Client device 104 includes an interface 116 and a media player 110 to play content, such as a video. At client device 104, a decoder system 112 receives the video bitstream, and decodes the video bitstream into decoded video frames. The decoded video frames are displayed by media player 110 in interface 116.

Film grain may be present in some videos, such as in shows and movies that are shot with traditional film cameras. Film grain may be a visible texture or pattern that appears in video shot on film. The film grain may appear as noise in the videos. Preserving the film grain from the source video in the video bitstream may be challenging for multiple reasons. For example, when film grain is present in the original source video, the bitrate of the video bitstream may be increased. Also, the random nature of film grain in source videos may cause the bitrate to randomly change as the bitrate increases for frames when film grain is encountered, which may affect the delivery of the video bitstream to client device 104. The random nature may affect the playback experience as the bitrate changes during the playback, which may cause re-buffering. Further, the random nature of the film grain in the video makes it difficult to predict when (e.g., which frames) and where (e.g., where in a frame) the film grain will occur in the source video using prediction schemes in video coding specifications. This may cause the compression to be inefficient.

In film grain synthesis, the film grain may be removed from the source video before encoding, and the video bitstream may not include the film grain from the source video when sent from server system 102 to client device 104. Also, digital cameras may not produce film grain in videos or frames of the source video may not include film grain, but the system may still add film grain to the videos. In light of the above, the video bitstream may not include the film grain from the source video; however, a film grain synthesis system 114-1 may model the film grain using film grain parameters and a film grain synthesis system 114-2 may synthesize film grain that can be added to the decoded video frames. However, traditional film grain synthesis may encounter problems. Typically, parameters for a film grain model may be used to describe the film grain that should be added to a decoded video. Although the models may add film grain to decoded video frames, the reconstructed film grain may not be desirable, such as the film grain may be far different from the original artistic intention in the original source video or may also introduce visual artifacts that were not included in the source video.

To overcome the above shortcomings, the system uses film grain decomposition to decompose the film grain into different components. In some embodiments, the components include encoding friendly film grain, synthesis friendly film grain, and encoding unfriendly/synthesis unfriendly film grain. Although these components are described, other components may be used. Encoding friendly film grain may be film grain that can be encoded at a bitrate under a threshold without the encoding friendly film grain being removed. Synthesis friendly film grain may be synthesized while maintaining the original artistic intent or may not introduce artifacts. Encoding unfriendly film grain may have to be encoded at a bitrate above a threshold to have the film grain appear in the decoded video. Synthesis unfriendly film grain may be synthesized but does not maintain the original artistic intent or may introduce artifacts. In film grain synthesis, synthesis unfriendly film grain may include artifacts that can be a repetitive pattern that has an annoying or unpleasant look. Artifacts can also be unstable film grain synthesis results in the temporal domain. For example, in some of the frames, the synthesized film grain is heavy, and in other frames, the synthesized film grain are very light. This can also cause unpleasant look.

A content analyzer 118 may analyze the source content to be encoded. Content analyzer 118 may decompose the source content into different components. The components may include clean content without the film grain, and different components of film grain including encoding friendly film grain, synthesis friendly film grain, and encoding unfriendly/synthesis unfriendly film grain. As discussed above, the encoding unfriendly/synthesis unfriendly film grain may be encoding unfriendly film grain, synthesis unfriendly film grain, or encoding unfriendly and synthesis unfriendly film grain.

The source content may be processed using different configurations. A use case configuration system 120 may determine a configuration to use to process the different components. The determination may be determined dynamically based on characteristics of the source content. For example, use case configuration system 120 may use characteristics of the source content to determine the configuration. In other embodiments, use case configuration system 120 may use a setting to determine a configuration. For example, the source content may be associated with a configuration. The source content is then processed via the selected configuration.

The following will describe different configurations of processing components of the film grain.

### Configuration #1

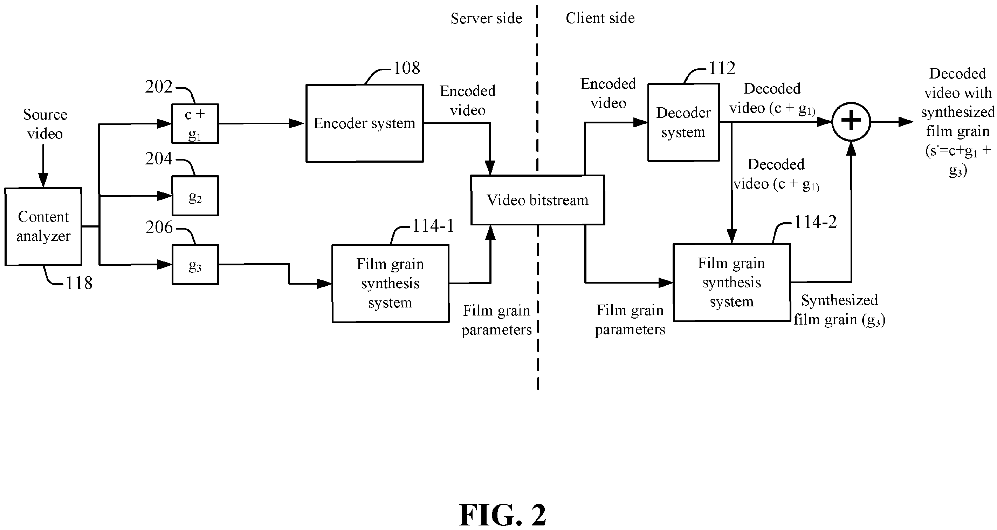

FIG. 2 depicts an example of a configuration #1 according to some embodiments. In configuration #1, a higher bitrate is enabled to encode encoder-friendly film grain, and film grain synthesis is supported to synthesize synthesis friendly film grain at client device 104. Configuration #1 includes a server side associated with server system 102 and a client side that is associated with client device 104.

Content analyzer 118 receives a source video. The source video may be a video that is going to be made available on the content delivery service and will be encoded, but source video may be used for other purposes. The video may be encoded in multiple different profiles for a profile ladder where the profiles may be encoded at different bitrates or quality, or bitrates and quality.

Content analyzer 118 may analyze the content and output a decomposition of the source video. For example, at 202, clean content and encoding friendly film grain c + g₁ is output. At 204, encoding unfriendly/synthesis unfriendly film grain g₂ is output. At 206, synthesis friendly film grain g₃ is output. Here, each component may be an image that includes the associated information. For example, the clean content and encoding friendly film grain is an image that include the content of the frame with the encoding friendly film grain. The synthesis friendly film grain is an image of synthesis friendly film grain. The encoding unfriendly/synthesis unfriendly film grain is an image of encoding unfriendly/synthesis unfriendly film grain. Images may be output for each frame of the source content and processed as described herein.

Configuration #1 may preserve some film grain, which may keep the artistic film grain in the decoded video. For example, some film grain may be encoded, and some film grain may be modeled and synthesized using film grain synthesis. The use of the film grain synthesis may help reduce the bitrate that is needed to encode the film grain by removing some film grain from the encoding pipeline.

In the process, encoder system 108 may encode the clean content and encoder-friendly film grain into an encoded video. The resulting encoded video includes the clean content and encoder-friendly film grain.

Film grain synthesis system 114-1 may model the synthesis friendly film grain using film grain parameters that describe the synthesis friendly film grain. The film grain parameters describe the film grain that should be synthesized and added to the decoded video at client device 104. The film grain parameters may describe different characteristics, such as the branded model of the source content, the film grain size, density, and amplitude, parameters of autoregressive film grain generator, parameters of frequency film grain descriptors, or other characteristics. The film grain parameters may be conveyed via the video bitstream, transmitted via side channels, or self-derived by film grain synthesis system 114-2. The encoded video and the film grain parameters may be transmitted from the server side to the client side. The video bitstream represents the different methods that could be used.

At the client side, the encoded video is passed to decoder system 112, which decodes the encoded video into decoded frames. Different decoders may be used in the process, such as different decoders using different coding specifications. This results in decoded video of the clean content and encoder-friendly film grain c + g₁.

Film grain synthesis system 114-2 receives the film grain parameters and decoded video. Film grain synthesis system 114-2 may then synthesize the synthesis friendly film grain. In the synthesis, film grain synthesis system 114-2 may collect features from the decoding process, such as syntax features from the video bitstream and/or decoder related features from decoder system 112. The syntax features and decoder related features may be referred to as decoding features generally. Syntax features may be information that refers to the video bitstream, such as the information that may be needed to perform decoding of video bitstream. Examples of syntax features include quantization parameters, frame type (I/B/P frames), motion vectors, etc. Syntax features may be sent in the video bitstream or via a separate control channel. Decoder related features may be features that may be determined based on the decoding of the video bitstream by decoder system 112. Examples of decoder related features include block partition results, distribution of quantization residue (e.g., distribution of an error between the original frame and the quantized version of the frame), etc. Although the specific features are described as being part of syntax features or decoder related features, the same features may be found in syntax features and decoder related features, such as quantization parameters, frame type, etc.

Film grain synthesis system 114-2 outputs the synthesis friendly film grain g₃. The synthesis of the film grain depends on the parameters that were determined from modeling of the film grain. Film grain synthesis system 114-2 may synthesize the film grain based on the film grain parameters and the features.

A combination of the decoded video and the synthesis friendly film grain results in decoded video with synthesized film grain (s' = c + g₁ + g₃). The synthesis unfriendly/encoding unfriendly film grain g₂ may not be encoded or synthesized. Here, the encoding unfriendly/synthesis unfriendly film grain may be discarded and is not included in the video with synthesized film grain s'. The exclusion of the encoding unfriendly/synthesis unfriendly film grain may allow the bitrate of the encoded video to be lower compared to if the encoding unfriendly is encoded. Also, the exclusion of the synthesis unfriendly film grain may remove film grain that caused artifacts or did not look like the original film grain.

### Configuration #2

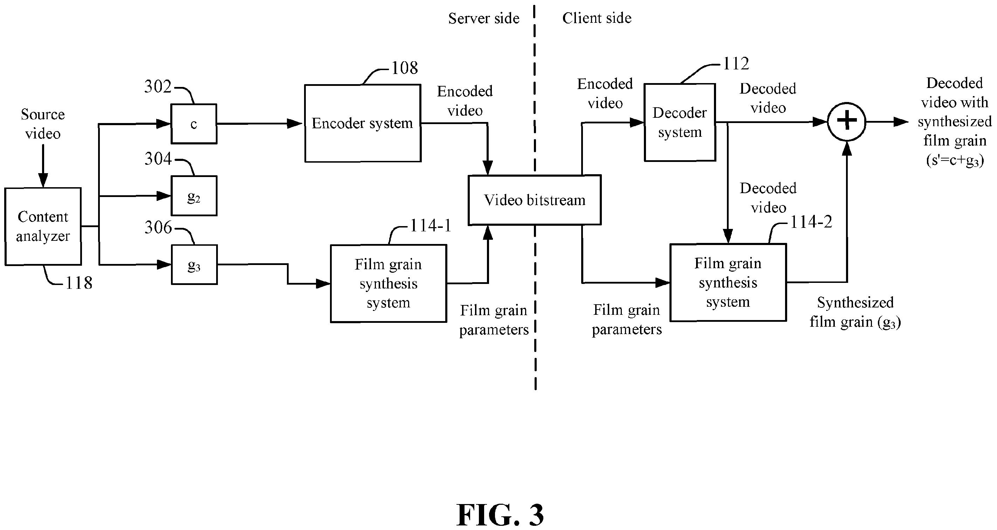

FIG. 3 depicts an example of a configuration #2 according to some embodiments. In configuration #2, a relatively low bitrate can be used and film grain synthesis is supported. A lower bitrate may be used because film grain may not be encoded by encoder system 108. That is, the film grain may require a higher bitrate to reproduce the film grain adequately in the decoded video.

Here, content analyzer 118 decomposes the source video into clean content c at 302, synthesis unfriendly film grain g₂ at 304, and synthesis friendly film grain g₃ at 306. Encoder system 108 may encode the clean content into encoded video. Film grain synthesis system 114-1 may model the synthesis friendly film grain into film grain parameters. The synthesis unfriendly film grain may be discarded. There may not be encoder unfriendly film grain in this case. However, if there is encoder unfriendly film grain, it may be discarded also.

The encoded video and the film grain parameters may be transmitted from the server side to the client side. Decoder system 112 decodes the encoded video into decoded video of the clean content c. Film grain synthesis system 114-2 synthesized the synthesis friendly film grain g₃ using the film grain parameters. The clean content is combined with the synthesized film grain to output video with synthesized film grain (s' = c + g₃). In this configuration, because encoder system 108 is not encoding encoder-unfriendly film grain, the bitrate that can be used is lower than configuration #1. For example, For 1080p videos, configuration #1 may use 6.5Mbps, 5.5Mbps are used for two respective profiles. However, for configuration #2, the bitrates of 3Mbps, 1Mbps may be used. The encoding of encoder-unfriendly film grain may have required a higher bitrate as discussed above. However, synthesis friendly film grain may be synthesized and film grain may be included in the video. This film grain may be closer to the original artistic intention and may be less likely to cause artifacts, and film grain can still be included in the displayed video.

### Configuration #3

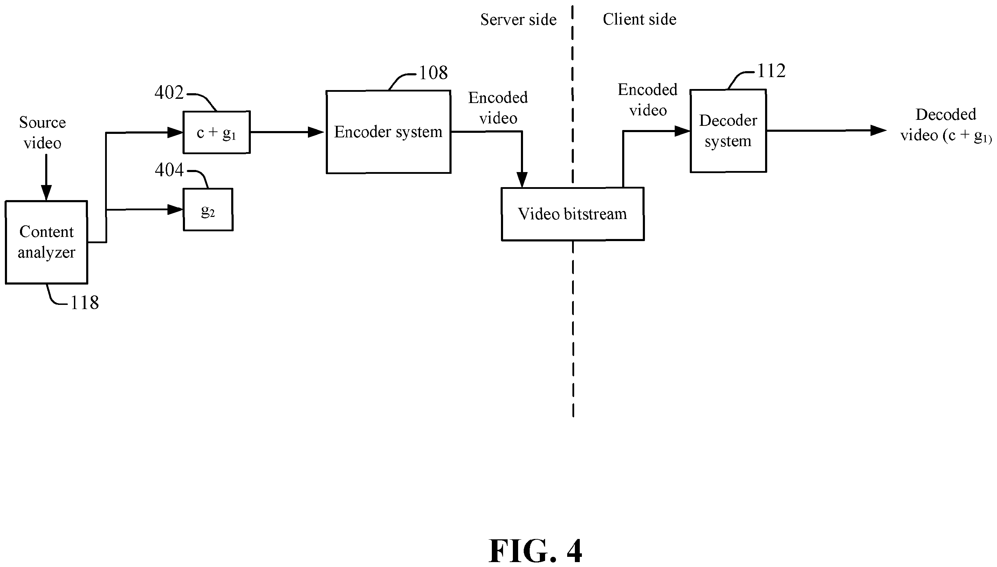

FIG. 4 depicts a configuration #3 according to some embodiments. In configuration #3, a relatively high bitrate is used and film grain preservation in the encoded video is required. Film grain synthesis may be disabled at client device 104.

Content analyzer 118 may decompose the source video into clean content and encoder-friendly film grain c + g₁ at 402. At 404, encoder-unfriendly film grain and film grain/synthesis unfriendly film grain g₂ are shown. Encoder system 108 encodes the clean content and encoder-friendly film grain. The encoder-unfriendly film grain may be discarded and film grain synthesis is not performed. There may not be synthesis unfriendly film grain, but if there is, the /synthesis unfriendly film grain may be discarded also. Decoder system 112 receives the encoded video and decodes the encoded video into decoded video that includes the clean content and encoder-friendly film grain c + g₁.

In the above, encoder-unfriendly film grain and synthesis unfriendly film grain may be discarded. This may eliminate encoder-unfriendly film grain that may require a high bitrate to encode. Also, synthesis unfriendly film grain that may not represent the original artistic intent or may introduce artifacts is not synthesized. However, the encoder friendly film grain is encoded to maintain some aspect of the film grain from the original source video.

In the different configurations, the source content is decomposed into components. The following will describe different methods to decompose the source content into different components. Although the following will describe processes that can be used to decompose the source content, embodiments are not limited to these processes.

### Film Grain Decomposition

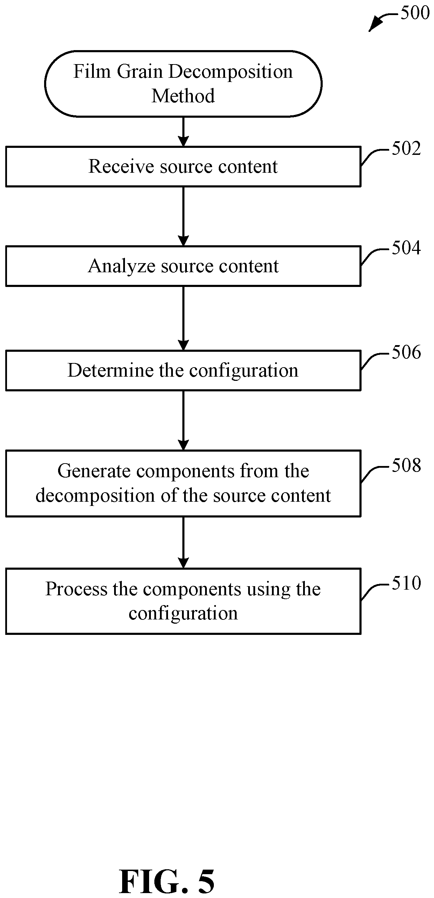

FIG. 5 depicts a simplified flowchart 500 of a method for performing a film grain decomposition process according to some embodiments. At 502, server system 102 receives the source content. The source content may be any content that is going to be encoded.

At 504, content analyzer 118 analyzes the source content. Content analyzer may analyze the source content to determine characteristics of the source content. Some characteristics may include the type of content, such as the content may be classified into different categories. For example, categories may include cartoons, movies, action movies, etc. The analysis of the content may include a spatial complexity analysis, a temporal complexity analysis, analysis of the color, lightness, the type of the content (such as animation, sports and so on), or other features.

At 506, use case configuration system 120 determines a configuration. For example, use case configuration system 120 may select one of the configurations discussed above based on the characteristics of the source content or other features. For example, one configuration may be more applicable to the characteristics of the source content. However, the configuration may not be fully determined by the content. For example, features such as specified requirements, the condition of the network (e.g., available bandwidth), the support of film grain synthesis at the client side, etc. may be considered. If the film grain synthesis is not supported at the client side, configuration #3 is only used. If the film grain synthesis is supported at the client side, configurations #1 and #2 may be used. For example, system 100 can calculate the spatial complexity and temporal complexity of the content. If the complexity if high, the content needs more bitrate to have a good quality. So use case configuration system 120 may select configuration #3, which does not encode film grain. This allows more bits for encoding the complex content. If the content is relatively simple, or the film grain is an important feature of the content, use case configuration system 120 may select configuration #1.

At 508, content analyzer 118 generates components from the decomposition of the source content. The process to generate the components may use different methods. For example, an encoding-based film grain decomposition may be used to decompose the source content into encoding friendly film grain and encoding unfriendly film grain. Also, a pre-analysis-based film grain decomposition may be performed. This decomposition may decompose the source content into encoding friendly, encoding unfriendly, synthesis friendly, or synthesis unfriendly film grain. In some embodiments, the encoding-based film grain decomposition may be used for configuration #1 or configuration #3. The pre-analysis-based film grain decomposition may be used for configurations #1, #2, or #3. The two processes may be used separately or in combination. These processes will be described in more detail below.

At 510, system 100 processes the components using the configuration. The processing may be performed as described above.

The following will now described different types of decomposition, but embodiments are not limited to these decomposition processes.

### Encoding-based Decomposition

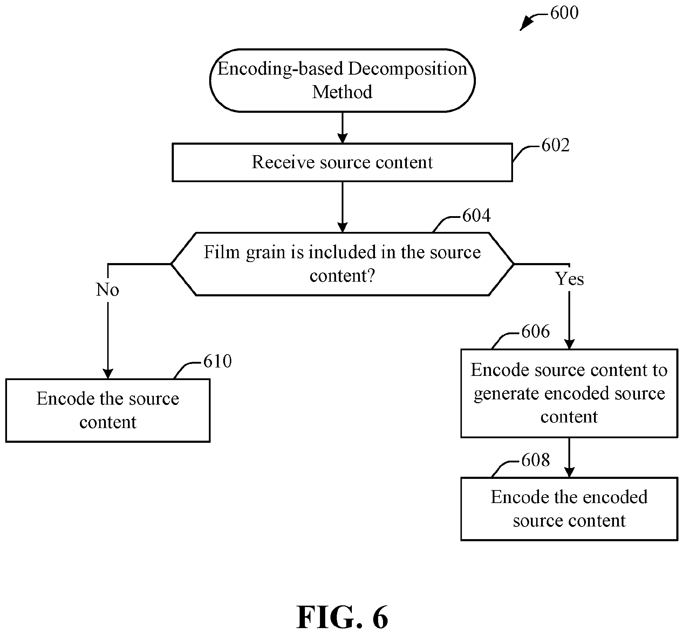

FIG. 6 depicts a simplified flowchart 600 of an encoding-based decomposition process according to some embodiments. At 602, content analyzer 118 receives the source video. At 604, content analyzer 118 determines if film grain is included in the source video. Content analyzer 118 may determine whether film grain is included in the source video using different processes. Film grain detection may be performed directly on the source video. For example, film grain detection may be performed using a denoised representation of the source content in which noise has been removed. The original source content and the denoised representation may be analyzed to determine differences. The differences could indicate whether or not the source content includes film grain or not, such as the differences may be analyzed and if present, indicate that film grain is present. Thresholds may be applied to determine an amount of noise that is required to determine film grain exists. Also, content analyzer 118 may receive input indicating whether or not the source video includes film grain, such as an identifier may be set that indicates whether or not the source video includes film grain. For example, a value of "1" indicates film grain is included, and a value of "0" indicates film grain is not included. Also, content analyzer 118 may analyze the source content using a prediction network to determine if the content includes film grain.

At 606, if the source content does include film grain, encoder system 108 encodes the source content. The source content is encoded to generate encoded source content. The encoded source content may be encoded using a setting S0. In some embodiments, the source content may be encoded using different settings. For example, the different settings may be based on the profiles that the source content should be encoded. In some embodiments, settings S1 to Sn may be used for the profile ladder. There may be a restriction on profiles that can be used based on the bitrates. For example, profiles S1 to Sx may be used that have bitrates below a threshold. In some examples, the settings S1 to Sx may include a resolution of 1080p (1920x1080) with a target bitrate of S1 to Sx of 8500 kbps, 7000 kbps, 5500 kbps, 3000 kbps, respectively. The encoding S0 may be a setting with a high bitrate that is above the bitrates of the settings S1 to Sx. This encoding may be a first pass encoding that may remove encoding unfriendly film grain. An example of a setting S0 may be for a 1080p resolution, the encoding target bitrate is 30 Mbps. The high bitrate may remove the encoding unfriendly film grain because film grain is usually a high frequency signal. An encoded video may remove some of the high frequency signal of the film grain when it is encoded. Here, encoder system 108 encodes it using a high bitrate to maintain the quality in the subsequent encoded source content where the encoded source content does not include encoder-unfriendly film grain. The encoder-unfriendly film grain cannot be preserved by the encoder even when encoded at very high bitrate. As the limitation of bandwidth for content delivery, preserving the encoder-unfriendly film grain by the encoding process is limited by the bitrate that can be used for encoding.

At 608, encoder system 108 then encodes the encoded source content. For example, the encoded source content may be encoded using settings S1 to Sx. This encoded source content does not have the encoder unfriendly film grain. Accordingly, this process may remove unfriendly film grain in configuration #1 and configuration #3.

If film grain is not included in the source content, at 610, encoder system 108 encodes the source content to generate source content components. For example, the source content is encoded using setting S 1 to Sx.

### Pre-analysis-based Film Grain Decomposition

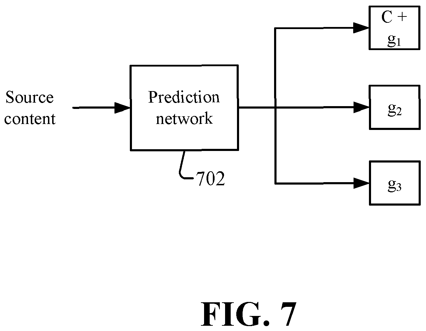

The second process may use a prediction network that may determine the components. FIG. 7 depicts an example of a prediction network 702 that can be used to perform the decomposition according to some embodiments. Prediction network 702 receives the source content. Prediction network 702 may be trained to remove encoding unfriendly/synthesis unfriendly film grain g₂. Also, prediction network 702 may be trained to decompose the source content into clean content plus encoder friendly film grain c + g₁ and synthesis friendly film grain g₃. Other components may also be determined, such as only clean content.

Prediction network 702 may be trained based on supervised learning in which samples of source content are input and the predicted components are analyzed to determine if the outputted components are similar to a ground truth. Parameters of prediction network 702 may be adjusted based on a difference. In some embodiments, the training dataset is collected with components of the clean content, the clean content with encoder friendly film grain, encoder unfriendly film grain, synthesis friendly film grain and synthesis unfriendly film grain. The prediction network 702 is then trained to predict the components.

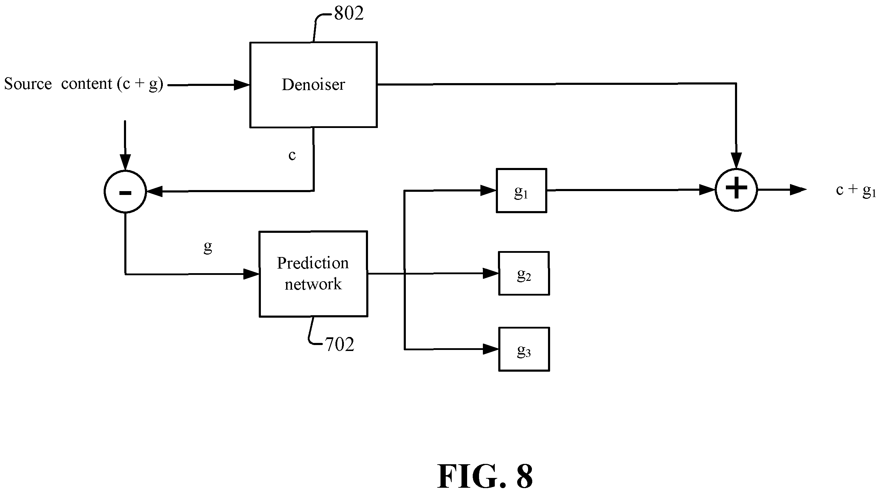

Other methods may be used to determine the encoder-friendly film grain and synthesis friendly film grain. FIG. 8 depicts a second example for determining encoder-friendly film grain and synthesis friendly film grain according to some embodiments. Source content that includes film grain c + g is input into a denoiser 802. Denoiser 802 may remove the film grain, which results in clean content c. The clean content is then removed from the source content, which results in film grain g.

Prediction network 702 then analyzes the film grain. Prediction network 702 may be trained to decompose the film grain into multiple components, such as encoder friendly film grain g₁, encoder-unfriendly/synthesis unfriendly film grain g₂, and synthesis friendly film grain g₃. The encoder friendly film grain is then added to the denoised video to form the clean content plus encoder friendly film grain c + g₁.

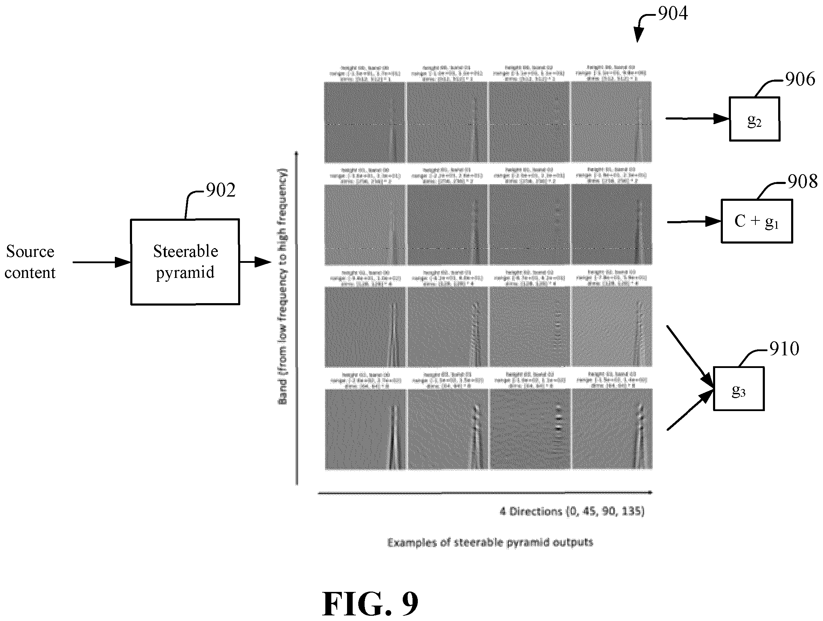

In a third process, digital signal processing may be used to decompose the source content. Only part of the frequency domain subbands may have noticeable impact on the subjective quality of the film grain as viewed by human viewers. The source content in film grain may be split into several subbands. The proper subbands may be selected that may include encoder friendly film grain and synthesis friendly film grain. The remaining subbands may include encoder-unfriendly film grain and synthesis unfriendly film grain. FIG. 9 shows an example of the selection of components using the frequency domain according to some embodiments. At 902, a steerable pyramid may be used to convert the source content into different subbands in the frequency domain. In some embodiments, steerable pyramid 902 may be a spatial domain steerable pyramid.

The input of steerable pyramid 902 may be the source content or the film grain that is extracted from the source content. This example may use the source content. The subbands are shown at 904. Some subbands may be associated with different types of film grain. In some embodiments, a high frequency subband may include encoder-unfriendly film grain because high-frequency signals may be challenging for an encoder system 108 to encode. At 906, this subband may be classified as encoding unfriendly film grain and synthesis unfriendly film grain g₂. Encoding friendly film grain may be from subbands that are not as high frequency. For example, at 908, this subband is classified as the clean content plus encoding friendly film grain c + g₁. The lower frequency film grain may be easier to generate using film grain synthesis. At 910, these subbands are classified as synthesis friendly film grain g₃.

Although a steerable pyramid is described, other methods for generating subbands may be used, such as a fast Fourier transform, Gaussian pyramid, frequency domain steerable pyramid, or Laplacian pyramid.

### Conclusion

Accordingly, source content may be decomposed into components using different processes. These components may then be encoded or synthesized in different configurations. The use of the decomposition and configurations may improve the encoding/decoding pipeline by using less bitrate, which may also improve the delivery process. Also, the display of the content may be improved by not including film grain that does not represent the original artistic intent or introduces artifacts.

### System

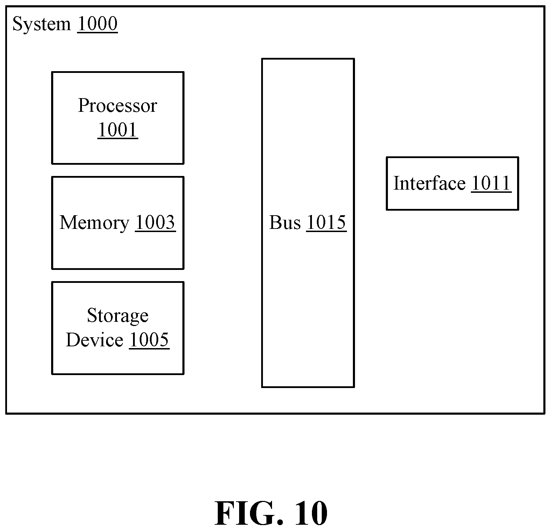

FIG. 10 illustrates one example of a computing device according to some embodiments. According to various embodiments, a system 1000 suitable for implementing embodiments described herein includes a processor 1001, a memory 1003, a storage device 1005, an interface 1011, and a bus 1015 (e.g., a PCI bus or other interconnection fabric.) System 1000 may operate as a variety of devices such as system 100, or any other device or service described herein. Although a particular configuration is described, a variety of alternative configurations are possible. The processor 1001 may perform operations such as those described herein. Instructions for performing such operations may be embodied in the memory 1003, on one or more non-transitory computer readable media, or on some other storage device. Various specially configured devices can also be used in place of or in addition to the processor 1001. Memory 1003 may be random access memory (RAM) or other dynamic storage devices. Storage device 1005 may include a non-transitory computer-readable storage medium holding information, instructions, or some combination thereof, for example instructions that when executed by the processor 1001, cause processor 1001 to be configured or operable to perform one or more operations of a method as described herein. Bus 1015 or other communication components may support communication of information within system 1000. The interface 1011 may be connected to bus 1015 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magnetooptical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities. Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
receiving source content;
decomposing the source content into a plurality of components, wherein components in the plurality of components comprise first film grain content and second film grain content;
processing the first film grain content, wherein the first film grain content is processed via an encoder system or a film grain synthesis system; and
delivering information for the first film grain content that was processed via the encoder system or the film grain synthesis system to a client device, wherein the second film grain content is not delivered to the client device.

2. The method of claim 1, wherein decomposing the source content into the plurality of components comprises:
decomposing the source content into content without film grain and the first film grain content,
wherein, optionally:
the content without film grain and the first film grain content is encoded via the encoder system, and
the second film grain content is not processed via the encoder system or the film grain synthesis system.

3. The method of claim 1 or 2, wherein:
the source content is decomposed into third film grain content, and
the third film grain content is processed via the film grain synthesis system,
wherein, optionally, the second film grain content is encoder unfriendly film grain content or synthesis unfriendly film grain content.

4. The method of claim 1, wherein decomposing the source content into the plurality of components comprises:
decomposing the source content into content without film grain,
wherein, optionally:
the content without film grain is encoded via the encoder system, and
the first film grain content is processed via the film grain synthesis system.

5. The method of claim 4, wherein the second film grain content is encoder unfriendly film grain content or synthesis unfriendly film grain content.

6. The method of claim 1, wherein decomposing the source content into the plurality of components comprises:
decomposing the source content into content without film grain and the first film grain content, wherein the content without film grain and the first film grain content is encoded via the encoder system.

7. The method of claim 6, wherein the second film grain content is not processed by the encoder system or the film grain synthesis system; and/or
wherein the second film grain content is encoder unfriendly film grain content or synthesis unfriendly film grain content.

8. The method of any one of claims 1 to 7, wherein decomposing the source content into the plurality of components comprises:
encoding the source content via the encoder system using a first setting, wherein the first setting generates encoded content that includes the first film grain content and not the second film grain content.

9. The method of claim 8, wherein processing the first film grain content comprises:
encoding the encoded content that includes the first film grain content using a set of settings that does not include the first setting; and
delivering the encoded content to the client device.

10. The method of any one of claims 1 to 9, wherein decomposing the source content into the plurality of components comprises:
inputting the source content into a prediction network; and
predicting the first film grain content and the second film grain content via the prediction network; and/or
wherein decomposing the source content into the plurality of components comprises:
generating a plurality of subbands based on different frequencies of the source content; and
selecting the first film grain content from one or more first subbands in the plurality of subbands and the second film grain content from one or more second subbands in the plurality of subbands.

11. The method of any one of claims 1 to 10, wherein:
the information for the content without film grain and the first film grain content is decoded by a decoder system to form decoded content without film grain and decoded first film grain content,
third film grain content is synthesized by a film grain synthesis system at the client device, and
decoded content without film grain and decoded first film grain content and the third film grain content is combined to form decoded content, wherein the decoded content is displayed at the client device.

12. The method of any one of claims 1 to 11, wherein:
the information for the source content without film grain is decoded by a decoder system to form decoded content without film grain,
the information for the first film grain content is synthesized by a film grain synthesis system at the client device to form synthesized first film grain content, and
the synthesized first film grain content is combined with the decoded content without film grain at the client device to form decoded content, wherein the decoded content is displayed at the client device.

13. The method of any one of claims 1 to 12, wherein:
the information for the source content without film grain and the first film grain content is decoded by a decoder system to form decoded content, wherein the decoded content is displayed at the client device.

14. A non-transitory computer-readable storage medium having stored thereon computer executable instructions, which when executed by a computing device, cause the computing device to be operable for:
receiving source content;
decomposing the source content into a plurality of components, wherein components in the plurality of components comprise first film grain content and second film grain content;
processing the first film grain content, wherein the first film grain content is processed via an encoder system or a film grain synthesis system; and
delivering information for the first film grain content that was processed via the encoder system or the film grain synthesis system to a client device, wherein the second film grain content is not delivered to the client device.

15. An apparatus comprising:
one or more computer processors; and
a computer-readable storage medium comprising instructions for controlling the one or more computer processors to be operable for:
receiving source content;
decomposing the source content into a plurality of components, wherein components in the plurality of components comprise first film grain content and second film grain content;
processing the first film grain content, wherein the first film grain content is processed via an encoder system or a film grain synthesis system; and
delivering information for the first film grain content that was processed via the encoder system or the film grain synthesis system to a client device, wherein the second film grain content is not delivered to the client device.
